Europäisches Patentamt

European Patent Office

Office européen des brevets

(11) Numéro de publication: **0 265 345**
**A1**

## (12) DEMANDE DE BREVET EUROPEEN

(21) Numéro de dépôt: **87402378.1**

(22) Date de dépôt: **22.10.87**

(51) Int. Cl.⁴: **F 02 P 17/00**
**F 02 D 41/40**

(30) Priorité: **24.10.86 FR 8614792**

(43) Date de publication de la demande:
**27.04.88 Bulletin 88/17**

(84) Etats contractants désignés:
**AT BE CH DE ES GB GR IT LI LU NL SE**

(71) Demandeur: **SOURIAU ET CIE**
**9-13, rue du Général Galliéni**
**F-92103 Boulogne-Billancourt (FR)**

(72) Inventeur: **Malaterre, Pierre**
**143 rue de Silly**
**F-92100 Boulogne-Billancourt (FR)**

(74) Mandataire: **Martin, Jean-Jacques et al**
**Cabinet REGIMBEAU 26, Avenue Kléber**
**F-75116 Paris (FR)**

(54) Dispositif de mesure et de réglage de l'avance à l'allumage d'un moteur à combustion interne.

(57) L'invention concerne un dispositif de mesure et de réglage de l'avance à l'allumage d'un moteur à combustion interne.

Il comprend des moyens de détection du point mort haut (1) du piston de référence (P) et des moyens (2) de détection optique de l'instant ou phase d'ignition dans le cylindre du piston (P). Les moyens de détection optique (2) permettent d'engendrer un signal électrique synchronisé sur l'instant d'ignition . Des moyens (3) de calcul de l'angle de phase entre la position du piston au point mort haut et la position du piston à l'instant d'ignition permettent d'afficher directement la valeur du décalage d'avance à l'allumage.

Application à la mise en oeuvre, à l'entretien, au réglage de moteurs à combustion interne de tout type.

FIG.1

## Description

<u>DISPOSITIF DE MESURE ET DE REGLAGE DE L'AVANCE A L'ALLUMAGE D'UN MOTEUR A COMBUSTION INTERNE.</u>

L'invention concerne un dispositif de mesure et de réglage de l'avance à l'allumage d'un moteur à combustion interne.

Le réglage convenable de l'avance à l'allumage des moteurs à combustion interne est une condition essentielle afin d'obtenir un rendement optimum de ces moteurs et une réduction à un minimum de la pollution atmosphérique provoquée par les effluents d'échappement.

Afin d'obtenir les conditions optimales précitées, il est impératif que l'inflammation du mélange air/carburant dans la chambre de compression du cylindre soit provoquée lorsque le mélange précité se trouve en phase de compression.

Cependant, la force d'expansion exercée par l'inflammation ou ignition du mélange air/carburant est maximale lorsque le piston se trouve en position de point mort haut. Un compromis de réglage de l'instant d'ignition ou d'inflammation par rapport au point mort haut du piston, le piston de référence, doit alors être réalisé, ce compromis étant actuellement désigné par le réglage de l'avance à l'allumage, l'instant d'ignition étant ainsi réglé légèrement antérieur à l'instant de détection du point mort haut du piston.

L'instant de détection du point mort haut du piston varie avec la charge et avec la vitesse du moteur.

Il est donc nécessaire, notamment avec les moteurs modernes actuellement très poussés, de mettre en oeuvre des procédés de réglage de l'avance à l'allumage des moteurs à combustion interne très performants.

Tous les procédés actuellement utilisés ont pour point commun la détection de l'instant de passage au point mort haut du piston et de l'instant d'ignition ou d'inflammation du mélange air/carburant. La détection de l'instant de passage au point mort haut du piston est, selon les techniques habituelles, réalisée soit au moyen d'un capteur magnétique détectant le passage d'un élément magnétique solidaire du vilebrequin ou d'un organe solidaire du vilebrequin,soit au moyen d'une lampe stroboscopique permettant la mise à coïncidence d'un repère ménagé sur le vilebrequin avec une fente ménagée dans le carter.

La détection de l'instant d'ignition ou d'inflammation est actuellement réalisée selon deux techniques différentes selon que le moteur à combustion interne est un moteur à allumage provoqué par une décharge électrique, moteur à essence, ou au contraire un moteur Diesel.

Dans le cas des moteurs à allumage provoqué par une décharge électrique, la détection de l'instant d'ignition ou d'inflammation est actuellement réalisée par détection du courant passant dans le câble d'alimentation de la bougie d'allumage au moyen d'une pince placée sur le câble et se comportant, du point de vue électrique, comme un transformateur d'intensité.

De par le principe même de la mesure, la pince doit présenter une excellente isolation à la tension électrique en mode commun, soit une isolation supérieure à quelques dizaines de milliers de volts. En outre, la mise en place erronnée de la pince, celle-ci étant retournée par rapport à sa position normale sur le câble, a pour effet de provoquer, en raison du caractère pseudopériodique du signal de détection unipolaire , une erreur de détection de la première oscillation laquelle a pour effet une erreur de réglage d'avance à l'allumage de 1 à 2° d'écart. Le déclenchement d'un compteur entre les instants d'ignition ou d'inflammation et de détection du point mort haut permet, compte tenu du nombre de cylindres du moteur, d'obtenir une information en degrés du décalage réel entre instant d'ignition et instant de passage au point mort haut du piston, le réglage d'avance à l'allumage pouvant alors être effectué.

Dans le cas des moteurs Diesel, en l'absence d'allumage par décharge électrique, l'air puis le gazole sont aspirés et le gazole joue, dans le moteur, le rôle temporel du courant d'une bougie d'allumage à un temps de décalage ou retard près. Dans ce cas, les instants à détecter sont donc l'instant d'injection du gazole et l'instant de passage du piston au point mort haut. Si la détection de l'instant de passage du piston au point mort haut peut être effectuée de manière classique, la détection de l'instant d'injection du gazole, fonction de l'instant de pression maximale à l'intérieur de la chambre de combustion, est liée à la détection de l'instant de levée d'aiguille de l'injecteur de gazole. L'apparition d'une forte pression dans le tube ou canal d'alimentation de l'injecteur provoque la levée d'aiguille et l'admission, dans la chambre de combustion d'une quantité élémentaire de gazole.

Afin de détecter l'instant de levée d'aiguille, on a à ce jour proposé de détecter l'instant d'apparition de la pression dans le tube d'alimentation du ou des injecteurs. De tels systèmes mettant en oeuvre un dispositif en forme de pince permettant de détecter la variation de contrainte mécanique du tube d'alimentation de l'injecteur ont été décrits notamment dans la demande de brevet français publiée sous le numéro 2 323 816 et dans la demande de certificat d'addition correspondante 2 358 561 au nom de la Demanderesse. Si ce système de détection donne satisraction du point de vue théorique, sa mise en oeuvre reste cependant délicate car, restant sensible aux vibrations mécaniques du moteur, il nécessite de manière impérative l'utilisation d'un circuit ou système de traitement du signal de détection très performant et donc onéreux. En outre, la relation entre l'instant d'injection et l'instant de pression maximale dans le cylindre n'est pas constante car dépendant du temps de transit de chaque quantité élémentaire de gazole donc du type de moteur et des conditions de fonctionnement de ceux-ci. En outre, les dispositifs connus sous le nom de régulateurs d'injection normalement utilisés ont pour effet de provoquer des perturbations de pression dans les tubes d'alimentation des injecteurs, perturbations analogues au coup de bélier, qu'il est nécessaire de linéariser.

La présente invention a pour but de remédier à l'ensemble des inconvénients précités par la mise en oeuvre d'un dispositif de mesure et de réglage de l'avance à l'allumage d'un moteur à combustion interne, dans lequel la détection et la transmission de l'instant d'ignition ou d'inflammation est effectuée par voie optique.

Un autre objet de la présente invention est la mise en oeuvre d'un dispositif de mesure et de réglage de l'avance à l'allumage d'un moteur à combustion interne pouvant être utilisé,soit pour un moteur à essence, soit pour un moteur Diesel au prix d'une adaptation ne demandant qu'une modification mineure du système de détection de l'instant d'inflammation.

Un autre objet de la présente invention est la mise en oeuvre, notamment dans le cas de moteurs Diesel, d'un dispositif de mesure et de réglage de l'avance à l'allumage dans lequel, du fait de la détection directe de l'instant d'ignition, un très grand degré de précision de mesure du calage d'avance à l'allumage est obtenu.

Le dispositif de mesure et de réglage de l'avance à l'allumage d'un moteur à combustion interne objet de l'invention, comprend des moyens de détection du point mort haut d'au moins un des pistons du moteur. Il est remarquable en ce qu'il comprend en outre des moyens de détection optique de l'instant ou phase d'ignition dans le cylindre du piston correspondant, les moyens de détection optique permettant d'engendrer un signal électrique synchronisé sur l'instant d'ignition et des moyens de calcul de l'angle de phase entre la position du piston au point mort haut et la position du piston à l'instant d'ignition.

Le dispositif de mesure et de réglage de l'avance à l'allumage du moteur à combustion interne, objet de l'invention, trouve application au domaine technique de l'industrie automobile, pour le réglage et l'entretien des moteurs de véhicules de tout type.

Une description plus détaillée de l'objet de l'invention sera donnée ci-après en liaison avec les dessins, dans lesquels :

  - la figure 1 représente un schéma synoptique du dispositif objet de l'invention,

  - la figure 2 représente un mode de réalisation particulier du dispositif de la figure 1 , dans le cas où le moteur est un moteur à essence,

  - la figure 3 montre un détail de réalisation avantageux, non limitatif, de la tête de détection utilisé par exemple dans le mode de réalisation de la figure 2,

  - la figure 4 montre un détail de réalisation avantageux non limitatif de la tête de détection dans un mode de réalisation du dispositif de l'invention plus spécialement destiné à un moteur Diesel,

  - la figure 5 montre un schéma synoptique d'un mode de réalisation non limitatif des moyens de calcul de l'angle de phase, entre la position du piston au point mort haut et la position du piston à l'instant d'ignition.

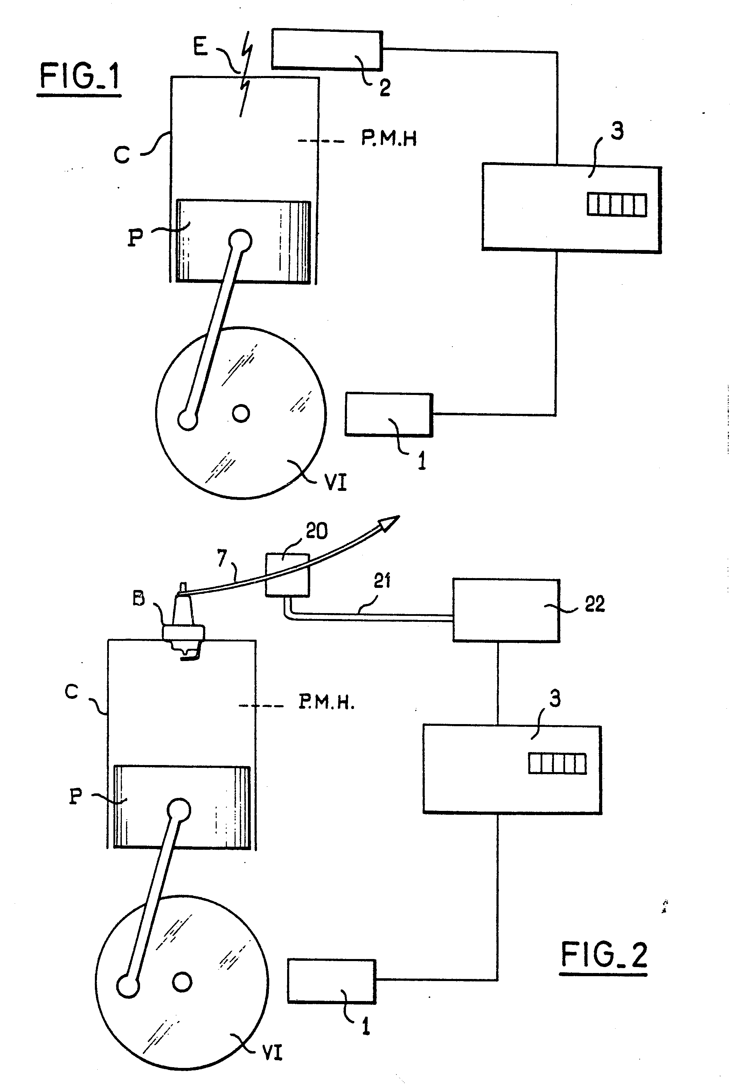

Le dispositif de mesure et de réglage de l'avance à l'allumage d'un moteur à combustion interne objet de l'invention sera tout d'abord décrit en liaison avec le schéma synoptique de la figure 1.

Conformément à la figure précitée, le dispositif comprend des moyens,notés 1, de détection du point mort haut, d'au moins un des pistons du moteur, piston appelé le piston de référence. De manière classique, et à titre d'exemple non limitatif, les moyens 1 de détection du point mort haut peuvent être constitués avantageusement par un capteur magnétique placé à proximité du vilebrequin, noté VI, lequel comporte une marque en matériau magnétique par exemple ainsi que décrit précédemment. Sur la figure 1, le piston de référence est noté P, et l'ignition ou inflammation du mélange air/carburant dans le cylindre C est symbolisée et représentée par la ligne brisée notée E, que cette ignition ou inflammation du carburant soit provoquée par une décharge électrique dans le cas du moteur à essence ou au contraire par inflammation spontanée du fait de la pression régnant dans le cylindre C dans le cas des moteurs Diesel.

Selon une caractéristique essentielle du dispositif objet de l'invention, celui-ci comporte en outre des moyens 2 de détection optique de l'instant ou phase d'ignition dans le cylindre C du piston de référence correspondant. Les moyens de détection optique 2 permettent d'engendrer un signal électrique ou optique synchronisé sur l'instant d'ignition.

Le dispositif objet de l'invention représenté schématiquement en figure 1, comprend en outre des moyens 3 de calcul de l'angle de phase entre la position du piston P au point mort haut, noté P.M.H.et la position du piston P à l'instant d'ignition telles que représentées en figure 1. Les moyens de calcul 3 de l'angle de phase précité, permettent d'obtenir une information en degré du décalage réel entre l'instant d'ignition et l'instant de passage au point mort haut du piston, le réglage d'avance à l'allumage pouvant alors être effectué.

Un mode de réalisation particulièrement avantageux du dispositif de mesure et de réglage de l'avance à l'allumage d'un moteur à combustion interne, conforme à la présente invention,sera décrit en liaison avec la figure 2, dans le cas d'un moteur à ignition déclenchée par étincelle ou décharge électrique, le moteur étant un moteur de type moteur à essence.

Conformément au mode de réalisation précité, les moyens 2 de détection optique peuvent comprendre un transducteur 20 électro-optique permettant à partir du courant délivré à la bougie d'allumage, notée B sur la figure 2, d'engendrer un flux lumineux. Des moyens 21 permettent la transmission optique du flux lumineux précité, vers des moyens optiques récepteurs 22 permettant à partir du flux lumineux d'engendrer une impulsion électrique constituant le signal électrique précédemment décrit en liaison avec la figure 1.

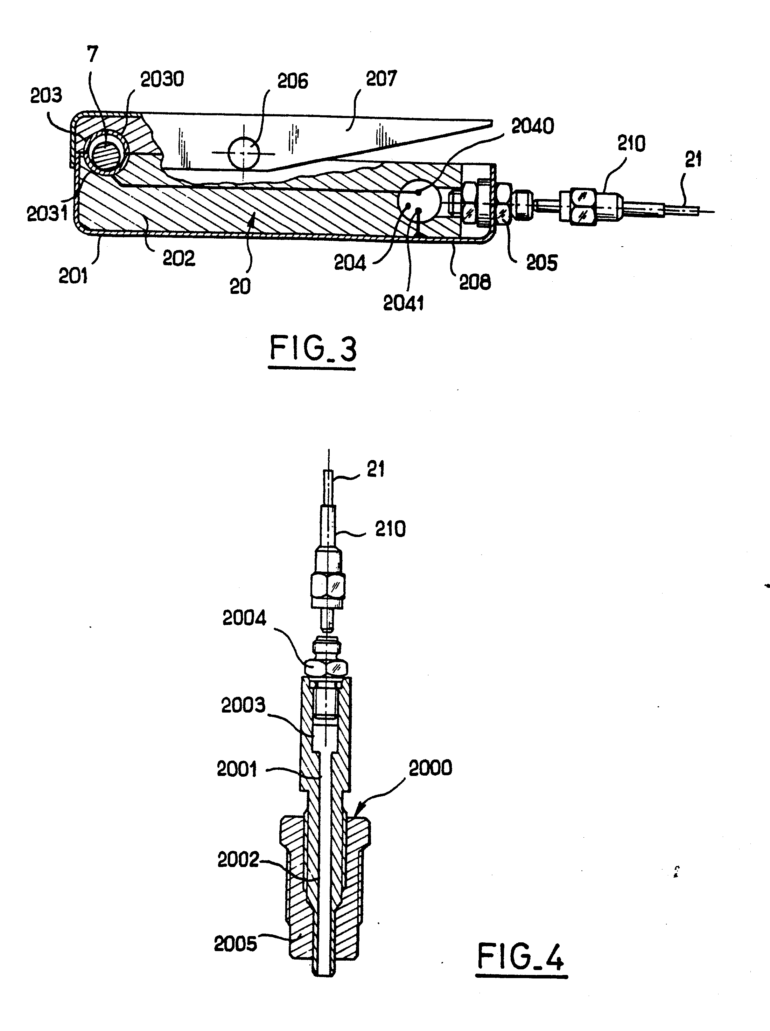

Un mode de réalisation particulier d'un transducteur électro-optique 20, particulièrement adapté à l'objet de l'invention dans le cas du mode de réalisation de la figure 2, sera décrit en liaison avec la figure 3.

Selon la figure 3 précitée, le transducteur électro-optique 20 peut être constitué par un tube à gaz noté 204, disposé à proximité du conducteur d'alimentation de la bougie d'allumage B, le conducteur précité, étant noté 7 sur la figure 3 et sur la figure 2. Le tube à gaz 204 permet sur ionisation du gaz pro voquée par influence électrique du courant d'allumage, d'engendrer le flux lumineux précédemment cité.

Selon le mode de réalisation avantageux de la figure 3, le transducteur électro-optique 20 peut être constitué par au moins les éléments ci-après. Un manchon métallique 203 de surface convenable est disposé sur la gaine isolante du conducteur 7 d'alimentation de la bougie B. Une paroi de blindage 201, forme avec le manchon métallique 203, un système de type condensateur électrique. Le tube à gaz 204 est tel que ses électrodes 2040 et 2041 sont connectées électriquement, respectivement au manchon électrique 203 et à la paroi de blindage 201 précédemment citée. Bien entendu, des moyens 205 de couplage optique des moyens de transmission optique 21 du flux lumineux au tube à gaz 204 sont également prévus.

Ainsi qu'on l'a représenté, en vue partiellement arrachée en figure 3, les éléments précités constitutifs du conducteur électro-optique 20 sont rendus solidaires par enrobage en un matériau plastique 202, lequel, avantageusement, remplit l'espace situé entre le blindage 201 et le manchon 203 notamment, afin de constituer le condensateur. En outre, les moyens de couplage 205 peuvent être constitués par un orifice ménagé dans la paroi de blindage 201 et dans l'enrobage 202, dans lequel des moyens de transmission optique du flux lumineux sont couplés au tube à gaz 204.

Le transducteur électro-optique 20 peut, par exemple, être de forme sensiblement cylindrique, et constitué par deux demi-cylindres articulés autour d'une articulation 206, laquelle dans ce cas peut être constituée par une ligne directrice, ou au contraire, ainsi que représenté en figure 3, il peut être agencé de façon à constituer et présenter la forme d'une pince articulée autour de l'articulation 206, la pince étant constituée par deux éléments 207 et 208 et le manchon 203 se subdivisant en deux parties complémentaires notées 2030 et 2031.

Un autre mode de réalisation avantageux non limitatif des moyens de détection optique 2 plus particulièrement adaptés à la détection de l'instant d'ignition ou d'inflammation du mélange air/carburant, dans le cas d'un moteur Diesel, sera maintenant décrit en liaison avec les figures 1 et 4.

Conformément aux figures précitées, les moyens 2 de détection optique comprennent une tête de détection optique 2000, permettant la transmission du flux lumineux provoqué par l'ignition engendrée dans le cylindre du piston de référence correspondant. Les moyens 21 de transmission optique du flux lumineux précité et les moyens optiques récepteurs 22 permettant à partir de ce flux lumineux d'engendrer une impulsion électrique, précédemment décrits en liaison avec la figure 2, sont en outre prévus de la même façon.

La tête de détection optique 2000, ainsi que représentée en coupe longitudinale en figure 4, peut avantageusement être constituée d'un élément noté 2005, calibré aux cotes et dimensions de la bougie de préchauffage du cylindre du moteur Diesel. La tête de détection 2000 est ainsi destinée à être substituée à la bougie de préchauffage, lors de la mesure et du réglage de l'avance à l'allumage du moteur.

La tête de détection optique comprend en outre un élément porte-fibre noté 2001, directement engagé dans l'élément calibré 2005. L'élément calibré 2005 peut avantageusement être ainsi engagé par vissage sur l'élément porte-fibre 2001 et constitué d'un adaptateur pour différentes bougies de préchauffage selon les modèles de moteurs considérés. L'élément calibré 2005, peut avantageusement être constitué en un matériau métallique tel que de l'acier résistant aux hautes températures par exemple. L'élément porte-fibre 2001 peut être constitué en un matériau métallique tel que de l'acier résistant aux hautes températures. Un barreau de verre est engagé à affleurement dans l'âme centrale de l'élément porte-fibre 2001, le barreau de verre étant noté 2002 sur la figure 4. Il est ainsi destiné à transmettre le flux lumineux produit par l'ignition du mélange air/carburant, dans la chambre de combustion du cylindre C. Le barreau de verre 2002 peut avantageusement être maintenu par une vis de blocage percée, notée 2003 sur la figure 4. Un connecteur optique noté 2004 est monté à l'extrémité supérieure de l'élément porte-fibre 2001, de façon à permettre la transmission du flux lumineux précité. Le connecteur optique 2004 peut ainsi être relié à un connecteur optique 210, lequel est directement relié aux moyens de transmission du flux optique 21 précédemment décrits.

Ainsi, le seul remplacement au niveau du connecteur optique 210, de la tête de détection telle que décrite en liaison avec les figures 3, 4 précitées, permet l'utilisation du dispositif objet de l'invention, soit dans le cas d'un moteur à essence ou au contraire dans le cas d'un moteur Diesel.

Bien entendu, de façon avantageuse non limitative, les moyens 21 de transmission du flux optique peuvent être constitués avantageusement par une fibre optique. La fibre optique utilisée peut être constituée par une fibre optique plastique, normalement disponible dans le commerce.

En outre, les moyens optiques récepteurs 22 directement couplés aux moyens de transmission 21 constitués par une fibre optique, peuvent avantageusement être constitués, soit dans le cas d'un moteur à essence , soit dans le cas d'un moteur Diesel, par un phototransistor.

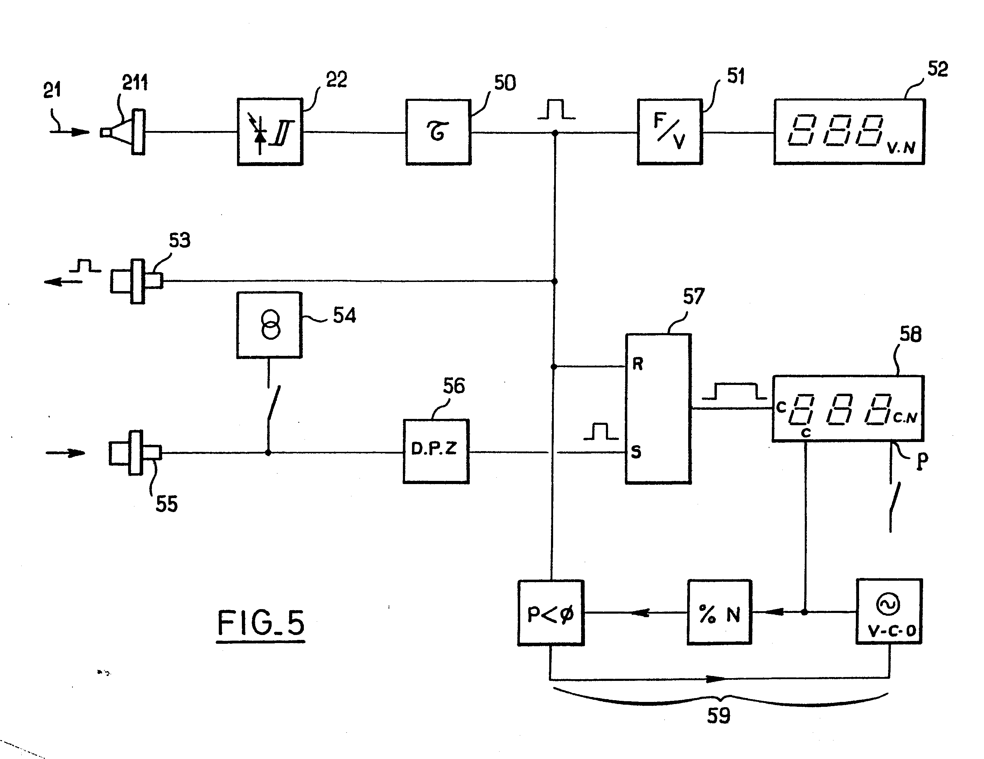

Une description détaillée des moyens de calcul de l'angle de phase entre la position du piston de référence au point mort haut et la position du piston à l'instant d'ignition, moyens de calcul notés 3 sur la figure 1 et la figure 2, sera maintenant donnée en liaison avec la figure 5.

Ainsi qu'il apparaît sur la figure précitée, les moyens de calcul 3 comprennent une entrée 211 constituée par un connecteur optique par exemple, destiné à recevoir les moyens de transmission 21 représentés en figure 2. Le connecteur optique 211 est directement relié aux moyens optiques récepteurs 22, constitués par un phototransistor, une photodiode, ou tout moyen transducteur opto-électronique. Les moyens optiques récepteurs 22 sont directement connectés, de façon classique, à un circuit monostable anti-rebond noté 50, destiné à assurer une mise en forme de l'impulsion électrique délivrée par les moyens optiques récepteurs 22. L'impulsion délivrée par le monostable 50 constitue ainsi le signal électrique synchronisé sur l'instant d'ignition.

De manière avantageuse, non limitative, les impulsions ainsi obtenues, peuvent être utilisées pour déclencher un circuit convertisseur fréquence-tension 51, lequel permet un affichage sur des moyens d'affichage 52, de la vitesse de rotation du moteur.

Les impulsions délivrées par le circuit monostable 50, constituant le signal électrique précité, peuvent, en outre, être délivrées sur une borne de synchronisation extérieure 53, utilisable à d'autres fins. Une entrée 55 est en outre prévue afin de recevoir le signal délivré par les moyens de détection 1 de point mort haut, tels que décrits en figures 1 et 2 précédemment. Un circuit de détection de passage par zéro 56 reçoit le signal présent sur l'entrée 55. Une source de tension continue 54 délivre un courant continu ajustable dépendant du type de capteur de point mort haut utilisé. Au passage du repère magnétique du vilebrequin devant le capteur de point mort haut, le circuit 56 délivre une impulsion. Une bascule de type RS 57 reçoit sur son entrée R, l'impulsion délivrée par le monostable 50, et sur son entrée S, l'impulsion délivrée par le circuit de détection de passage à zéro 56. La bascule RS 57 délivre ainsi entre les instants d'ignition correspondants à l'impulsion délivrée par le monostable 50 et de passage au point mort haut correspondant à l'impulsion délivrée par le circuit de détection de passage à zéro 56, une impulsion de commande, permettant l'enclenchement-déclenchement d'un compteur afficheur 58. Une horloge de référence comportant une boucle de phase 59, délivre des impulsions de comptage sur une entrée de comptage C, du compteur afficheur 58. La boucle de phase peut comporter un diviseur ajustable de rapport N, le rapport de division N précité pouvant être ajusté en fonction de la résolution souhaitée. Sur déclenchement par une impulsion délivrée par le monostable 50, le compteur afficheur 58 peut ainsi décompter le nombre d'impulsions engendrées par l'horloge à boucle de phase 59 et afficher ainsi, en fonction de la résolution choisie, la valeur du calage d'avance à l'allumage du piston de référence. Le compteur afficheur 58 comporte une entrée de prépositionnement notée p. Celle-ci permet d'introduire une valeur dépendant du type de moteur pour obtenir en lecture directe une valeur identique à celle trouvée avec le procédé décrit dans les demandes de brevet français 2 323 816 et 2 358 561.

On a ainsi décrit un dispositif de mesure et de réglage de l'avance à l'allumage d'un moteur à combustion interne particulièrement performant, en ce que le calcul de l'angle de phase entre instant d'ignition et instant de passage au point mort haut du piston est directement effectué par rapport à l'instant d'ignition physiquement détecté.

En outre, le dispositif objet de l'invention est particulièrement avantageux à l'utilisation compte tenu du fait que la mesure et le réglage de l'avance à l'allumage, tant d'un moteur à essence que d'un moteur à combustion interne peuvent être réalisés à partir du même dispositif par seul changement de la tête de détection. Ce changement est particulièrement aisé à opérer, puisqu'il suffit ainsi à l'utilisateur de remplacer la tête de détection au niveau d'un connecteur de type connecteur à fibres optiques.

Le dispositif de mesure et de réglage de l'avance à l'allumage selon l'invention permet d'avoir une lecture directe ou corrigée de la mesure d'avance à l'allumage.

## Revendications

1. Dispositif de mesure et de réglage de l'avance à l'allumage d'un moteur à combustion interne, comprenant des moyens (1) de détection du point mort haut d'au moins un des pistons du moteur, des moyens (2) de détection optique de l'instant ou phase d'ignition dans le cylindre du piston correspondant, lesdits moyens de détection optique permettant d'engendrer un signal électrique synchronisé sur l'instant d'ignition, et des moyens (3) de calcul de l'angle de phase entre la position du piston au point mort haut (P.M.H.) et la position du piston à l'instant d'ignition, caractérisé en ce que, dans le cas d'un moteur à ignition déclenchée par étincelle électrique, lesdits moyens (2) de détection optique comprennent :

- un transducteur (20) électro-optique permettant à partir du courant délivré à la bougie d'allumage, d'engendrer un flux lumineux, ledit transducteur (20) électro-optique étant constitué au moins par un manchon métallique (203) de surface convenable disposé sur la gaine isolante du conducteur d'alimentation de la bougie, une paroi de blindage (201) formant, avec ledit manchon métallique (203) un syème de type condensateur électrique, un tube à gaz (204) dont les électrodes sont respectivement électriquement connectées au manchon électrique (203) et à la paroi de blindage (201),

- des moyens (21) de transmission optique du flux lumineux, et des moyens (205) de couplage optique des moyens de transmission optique (21) du flux audit tube à gaz,

- des moyens optiques récepteurs (22) permettant à partir du flux lumineux d'engendrer une impulsion électrique.

2. Dispositif selon la revendication 1, caractérisé en ce que ledit tube à gaz (204) étant disposé à proximité du conducteur (7) d'alimentation de la bougie d'allumage, ledit tube à gaz (204) sur ionisation du gaz provoquée par influence électrique du courant d'allumage permet d'engendrer ledit flux lumineux.

3. Dispositif selon la revendication 1 ou 2, caractérisé en ce que lesdits éléments sont rendus solidaires par un enrobage en matériau plastique (202), lesdits moyens de couplage (205) étant constitués par un orifice ménagé dans la paroi de blindage et dans l'enrobage dans lequel les moyens de transmission optique du flux lumineux sont couplés audit tube à gaz.

4. Dispositif selon l'une des revendications 1 à 3, caractérisé en ce que ledit transducteur électro-optique (20) est de forme sensiblement cylindrique et constitué par deux demi-cylindres articulés autour d'une ligne directrice.

5. Dispositif de mesure et de réglage de l'avance à l'allumage d'un moteur à combustion interne, comprenant des moyens (1) de détection du point mort haut d'au moins un des pistons du moteur, des moyens (2) de détection optique de l'instant ou phase d'ignition dans le cylindre du piston correspondant, lesdits moyens de détection optique permettant d'engendrer un signal électrique synchronisé sur l'instant d'ignition, et des moyens (3) de calcul de l'angle de phase entre la position du piston au point mort haut (P.M.H.) et la position du piston à l'instant d'ignition, caractérisé en ce que, dans le cas d'un moteur Diesel, lesdits moyens (2) de détection optique comprennent:

- une tête de détection optique (2000) permettant la transmission du flux lumineux provoqué par l'ignition provoquée dans le cylindre du piston correspondant, ladite tête de détection optique (2000) étant constituée par un élément (2005) calibré aux cotes et dimensions de la bougie de préchauffage du cylindre du moteur Diesel, et étant destinée à être substituée à ladite bougie de préchauffage lors de la mesure et du réglage à l'avance à l'allumage du moteur,

- des moyens (21) de transmission optique du flux lumineux,

- des moyens optique récepteurs (22) permettant à partir du flux lumineux d'engendrer une impulsion électrique.

6. Dispositif selon l'une des revendications 1 à 5, caractérisé en ce que lesdits moyens (21) de transmission sont constitués par une fibre optique.

7. Dispositif selon l'une des revendications 1 à 6, caractérisé en ce que les moyens optiques récepteurs (22) sont constitués par un phototransistor couplé aux moyens de détection optique par lesdits moyens de transmission.

0265345

## FIG_1

## FIG_2

0265345

FIG.3

FIG.4

0265345

FIG_5

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | GB-A-2 098 756 (ITT) <br> * Figure 1; page 2, ligne 109 - page 3, ligne 32 * <br> --- | 1,5-7 | F 02 P  17/00 <br> F 02 D  41/40 |
| X | FR-A-2 331 032 (PEUGEOT) <br> * Figure 1; page 2, ligne 11 - page 3, ligne 6 * <br> --- | 1 | |
| X | DE-A-3 416 584 (TOYOTA) <br> * Figures 1-4; page 12, ligne 10 - page 16, ligne 24 * <br> --- | 5-7 | |
| A | US-A-3 858 113 (G.A. PRUSS) <br> * En entier * <br> --- | 1-4 | |
| A | US-A-3 693 148 (J.E. PITTMAN) <br> * En entier * <br> ----- | 1,2 | |

| | | DOMAINES TECHNIQUES RECHERCHES (Int. Cl.4) |
|---|---|---|
| | | F 02 P <br> F 02 D |

**Le présent rapport a été établi pour toutes les revendications**

| Lieu de la recherche | Date d'achèvement de la recherche | Examinateur |
|---|---|---|
| LA HAYE | 12-12-1987 | GODIN CH.G. |

EPO FORM 1503 03.82 (P0402)